Europäisches Patentamt

European Patent Office

Office européen des brevets

Veröffentlichungsnummer: **0 282 954**
**A2**

## EUROPÄISCHE PATENTANMELDUNG

Anmeldenummer: **88104032.3**

Anmeldetag: **14.03.88**

Int. Cl.⁴ **G06K 7/00**

Priorität: **17.03.87 DE 3708664**

Veröffentlichungstag der Anmeldung:
**21.09.88 Patentblatt 88/38**

Benannte Vertragsstaaten:
**DE FR IT SE**

Anmelder: **Siemens Aktiengesellschaft Berlin und München**
**Wittelsbacherplatz 2**
**D-8000 München 2(DE)**

Erfinder: **Kleine, Peter, Dipl.-Ing.**
**Kramerstrasse 9**
**D-8121 Fischen(DE)**
Erfinder: **Wechsler, Klaus**
**Johannisweg 5**
**D-8039 Puchheim(DE)**

Chipkartenleser.

Chipkartenleser (3) mit einer duch Stege (6, 7) und senkrecht dazu verlaufenden Seitenwänden (4, 5) begrenzten Einführungsöffnung (2) zur Aufnahme einer Chipkarte (1).

Es soll ein Weg aufgezeigt werden, durch den die Entnahme der Chipkarte (1) aus dem Chipkartenleser (3) im Lesezustand erschwert wird.

Dies wird durch eine die Einführungsöffnung (2) begrenzende Wandung (8, 9, 10) erreicht, die in der Lesestellung der Chipkarte (1) deren freies Ende geringfügig überragt oder sich in einer Ebene mit dem freien Ende der Chipkarte (1) befindet.

FIG 2

EP 0 282 954 A2

## Chipkartenleser

Die vorliegende Erfindung beinhaltet einen Chipkartenleser mit einer durch parallel zueinander verlaufenden Seitenwände und senkrecht zu ihnen angeordnete Stege begrenzten Einführungsöffnung zur Aufnahme einer Chipkarte.

Nach dem Einbringen der Chipkarte in das Gehäuse eines Chipkartenlesers wird die Karte in der Lesestellung zumeist mechanisch verriegelt, wobei in dieser Stellung Kontakte an dem Chip zur Anlage gelangen. Nach Beendigung des Lesevorgangs wird die Karte durch Druck von seiten des Benutzers aus der Verriegelungsstellung gelöst, wobei die Kontakte von dem Chip abheben. Die Karte kann dann dem Chipkartenleser entnommen werden. Wird nun die Chipkarte aus Unachtsamkeit von dem Benutzer in der Lesestellung aus dem Kartenleser entfernt, so können sowohl die Kontakte als auch der Chip beschädigt werden, was auf die Dauer zur Unbrauchbarkeit von Chip und Kontakten führen kann.

Der vorliegenden Erfindung liegt daher die Aufgabe zugrunde, einen Weg aufzuzeigen, durch den das Ziehen der Chipkarte im Lesezustand erschwert wird.

Diese Aufgabe wird dadurch gelöst, daß zumindest eine entgegen Federkraft verschiebbare und die Einführungsöffnung begrenzende Wandung vorgesehen ist, die sich in der Lesestellung mit dem freien Ende der Chipkarte in einer Ebene befindet oder diese geringfügig überragt.

Durch Vorsehen einer entgegen Federkraft verschiebbaren Wandung wird die Chipkarte im Lesezustand vor einem direkten Zugriff durch den Benutzer geschützt. Beim Einführen der Chipkarte in den Chipkartenleser wird die Wandung entgegen Federkraft soweit zunächst verschoben, bis die Chipkarte in der Lesestellung ver rastet. Wenn der Benutzer die Karte freigibt, kehrt die Wandung in ihre Ausgangsstellung zurück, wobei sie sich entweder in einer Ebene mit dem freien Ende der Chipkarte befindet oder dieses Ende geringfügig überragt. Diese Wandung kann beispielsweise als Teilbereich der Seitenwand ausgebildet sein und in der Seitenwand geführt und gehaltert sein. Es besteht auch die Möglichkeit, als Wandung zumindest eine innerhalb der Einführungsöffnung angeordnete und parallel zu der Seitenwand verlaufende Wand vorzusehen. Als Feder kann bei dieser Anordnung z. B. eine Spiral-bzw. Blattfeder oder ein am Chipkartenlesergehäuse angespritzter federnder Lappen dienen.

Die Erfindung soll im folgenden anhand von Ausführungsbeispielen näher erläutert werden.

Es zeigen jeweils in perspektivischer Ansicht

FIG 1 teilweise eine erste Ausführungsform des die Chipkarte aufnehmenden Bereiches des Chipkartenlesers,

FIG 2 teilweise eine zweite Ausführungsform des die Chipkarte aufnehmenden Bereiches des Chipkartenlesers.

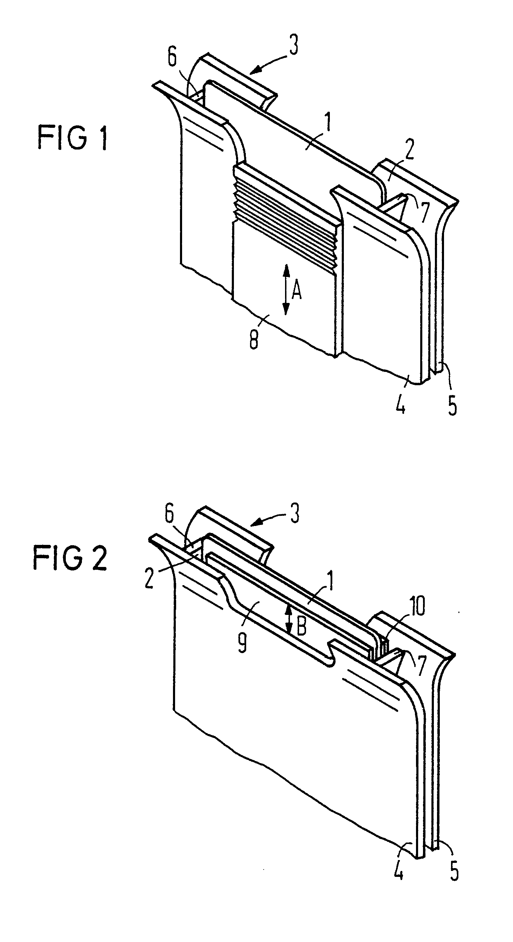

Die in FIG 1 gezeigte und der Aufnahme einer Chipkarte 1 dienende Einführungsöffnung 2 im Gehäuse eines Chipkartenlesers 3 ist schachtartig gestaltet. Die den Abmessungen der Chipkarte in etwa entsprechende Einführungsöffnung 2 wird begrenzt durch die beiden parallel zueinander verlaufenden Seitenwände 4 und 5 sowie durch die beiden senkrecht zu ihnen verlaufenden Stege 6 und 7.

In den FIG ist die Chipkarte 1 im eingesteckten Zustand dargestellt. In diesem Zustand liegen auf dem Chip der Karte Kontakte der Leseeinrichtung an. Wird die Karte in diesem Lesezustand aus dem Chipkartenleser 3 aus Unachtsamkeit von dem Benutzer entfernt, so können sowohl die Kontakte als auch der Chip selbst beschädigt werden. Um das Ziehen der Chipkarte im Lese zustand zu erschweren, besitzen die Seitenwände 4 und 5 entgegen Federkraft (Pfeilrichtung A) verschiebbare Teilbereiche 8. Die Teilbereiche 8 sind innerhalb der Seitenwände 4 und 5 geführt und gehalten. Als Feder kann in diesem Fall z. B. eine Spiral-oder Blattfeder oder ein am Chipkartenlesergehäuse angespritzter federnder Lappen dienen.

Die in FIG 2 dargestellte Einführungsöffnung 2 eines Chipkartenlesers wird ebenfalls durch die parallel zueinander verlaufenden Seitenwände 4 und 5 sowie durch die senkrecht zu ihnen verlaufenden Stege 6 und 7 begrenzt. Innerhalb dieser Einführungsöffnung 2 sind wiederum entgegen Federkraft verschiebbare und parallel zu den Seitenwänden 4 und 5 (Pfeilrichtung B) verlaufende Wände 9 und 10 angeordnet. Auch hier kann als Feder eine Spiral-bzw. Blattfeder oder ein entsprechender angespritzter federnder Lappen dienen.

Beim Einstecken der Chipkarte in die Einführungsöffnung wird diese in der Lesestellung zumeist mechanisch verriegelt. Bei den in den FIG gezeigten Anordnungen verschieben sich beim Einsteckvorgang die Teilbereiche 8 bzw. die Wände 9 und 10 in der Bildebene nach unten. Nachdem die Chipkarte in der Lesestellung verriegelt ist und der Benutzer den Einsteckvorgang beendet hat, verschieben sich die Teilbereiche 8 bzw. die Wände 9 und 10 in der Bildebene nach oben und befinden sich in etwa in einer Ebene mit dem freien Ende der Chipkarte oder überragen dieses freie Ende nur geringfügig. In dieser Endstellung wird der Zugriff zu der Chipkarte von seiten der Bedienungsperson erheblich erschwert.

**Ansprüche**

1. Chipkartenleser (3) mit einer durch parallel zueinander verlaufende Seitenwände (4, 5) und senkrecht zu ihnen angeordnete Stege (6, 7) begrenzten Einführungsöffnung (2) zur Aufnahme einer Chipkarte (1), **dadurch gekennzeichnet,** daß zumindest eine entgegen Federkraft verschiebbare und die Einführungsöffnung (2) begrenzende Wandung (8, 9, 10) vorgesehen ist, die sich in der Lesestellung mit dem freien Ende der Chipkarte (1) in einer Ebene befindet oder dieses Ende geringfügig überragt.

2. Chipkartenleser nach Anspruch 1, **dadurch gekennzeichnet,** daß die Wandung als Teilbereich (8) der Seitenwand (4 bzw 5) ausgebildet ist und in der Seitenwand (4 bzw. 5) geführt und gehaltert ist.

3. Chipkartenleser nach Anspruch 1, **dadurch gekennzeichnet,** daß zumindest eine innerhalb der Einführungsöffnung angeordnete und zu der Seitenwand (4, 5) parallel verlaufende Wand (9, 10) vorgesehen ist.

4. Chipkartenleser nach Anspruch 1, **dadurch gekennzeichnet,** daß als Feder eine Spiral-bzw. Blattfeder oder ein am Chipkartenlesergehäuse angespritzter federnder Lappen dient.

FIG 1

FIG 2